# EUROPEAN PATENT SPECIFICATION

(11) **EP 3 442 763 B1**
(45) Date of publication and mention of the grant of the patent: **26.06.2019**
(21) Application number: 18731855.5
(22) Date of filing: 21.06.2018
(51) Int. Cl.: B29B 9/16, B29B 13/06, F26B 3/06, F26B 17/22, F26B 5/08, B29B 9/06, B29K 105/00, B29K 23/00

(54) **PELLET DRYING AND DEGASSING METHOD**
PELLETTROCKNUNGS- UND -ENTGASUNGSVERFAHREN
PROCÉDÉ DE SÉCHAGE ET DE DÉGAZAGE DE PASTILLES

(30) Priority: 26.06.2017 EP 17177770
(43) Date of publication of application: 20.02.2019
(73) Proprietor: Basell Polyolefine GmbH, 50389 Wesseling (DE)
(72) Inventor: MEI, Giulia, 44122 Ferrara (IT); MOHRBUTTER, Juergen, 53347 Alfter (DE); LITTMANN, Dieter, 35325 Mücke (DE); WOLF, Christoph, 50259 Pulheim-Dansweiler (DE); FINETTE, Andre-Armand, 50997 Köln (DE); DEUERLING, Michael, 53919 Weilerswist (DE); PENZO, Giuseppe, 44122 Ferrara (IT)
(74) Representative: Seelert, Stefan
(86) International application number: PCT/EP2018/066666
(87) International publication number: WO 2019/002100

(56) References cited:
- EP-A1- 2 351 637
- US-A1- 2010 126 036
- US-A1- 2012 077 951
- US-A1- 2015 021 807
- US-A1- 2016 331 005
- GALA INDUSTRIES: "Centrifugal dryers", 20070901 , 1 September 2007 (2007-09-01), pages 1-6, XP002512385, Retrieved from the Internet: URL:http://www.gala-industries.com/downloa ds/corp_brochures/Dryers.pdf [retrieved on 2009-01-27]

## Description

### FIELD OF THE INVENTION

The present disclosure provides a method for drying and degassing polymer pellets and a process for manufacturing LDPE-pellets using said method.

### BACKGROUND OF THE INVENTION

Polymers are formed by a polymerization reaction wherein often monomer fluids are reacted at high pressure conditions. Various methods can be used to obtain polymer pellets therefrom. Said polymer pellets have to be dried. Processes for providing pellets and drying methods for said pellets are well known in the art.

US 9,126,353 B2 relates to a method for making pelletized polyolefin resins for food articles. The pellets are heated and purged of volatile materials.

US 4,820,463 A discloses a process for degassing and pelletizing polyolefin particles produced by a gas phase polymerization. The polyolefin particles are submitted to a primary degassing, preferably at the outlet of a reactor for catalytic polymerization in the gas phase. Then the polyolefin particles are subjected to a secondary degassing step comprising agitating the particles by a mechanical stirrer.

US 5,911,928 A discloses a method for producing polyolefin resins granules, which comprises extruding by using a homodirectional (co-rotating) twin-screw kneading extruder a polyolefin resin from a die nozzle.

WO 01/070473 A1 discloses a method for granulating thermoplastic polyolefins, wherein the polymer powder prepared in the polymerization reactor is melted and homogenized in an extruder, then forced through an extrusion die and granulated.

US 8,359,765 B2 relates to a method for dewatering and drying a mixture made of plastic granulate and water.

US 4,030,205 A relates to a system for drying particulate materials that tend to fuse or agglomerate while being heated and includes the steps of directing into the lower portion of a dispensing hopper filled with particles of the material a stream of hot dry air at a temperature above the temperature range in which the particles are unstable and tend to cling to one another and allowing the stream of air to pass upwardly through the particles in the hopper and to transfer its heat to the particles and form a temperature gradient in the body of particles in the hopper which is higher than the critical temperature range of the material at the lower portion of the hopper and which causes the particles to pass through the critical temperature range as the particles are dispensed downwardly from the hopper.

US 2012/0077951 A1 discloses a method for increasing the molecular weight of a polyester granulate in which polyester granules, after having passed an agitating centrifuge, are subjected to a thermal drying and posttreatment by a supply of a gas flow. US 2016/0331005 A1 discloses a process for drying and powderizing of functional foods, nutraceuticals, and natural health ingredients in a conical-cylindrical drying chamber. US 2015/0021807 A1 discloses an apparatus and process to maintain control of temperature for the pelletization of polymeric material. The system includes a mixing vessel, pelletizer and centrifugal dryer. Such centrifugal driers are, for example, produced and marketed by Gala Industries, Inc.. EP 2 351 637 A1 discloses a method for cleaning resin pellets comprising introducing the resin pellets and water into a tube body and cleaning the resin pellets by water flow, wherein the method can be carried out in a cleaning device comprising a centrifugal dewatering unit.

Some of the above methods also use air as a drying agent, wherein moisture is removed by an air flow. This results in a contaminated air flow that incorporates hydrocarbons that can be harmful to the environment and thus must be properly disposed of.

There is a need to provide a method featuring a higher efficiency in drying while producing less waste. A further object is to reduce costs and to ensure a high level of safety.

### SUMMARY OF THE INVENTION

The present disclosure provides a method for the preparation of dried polymer pellets in a facility. The facility has a dryer with a first chamber comprising an upper and a lower end comprising a first polymer inlet, a first polymer outlet above the polymer inlet, a first gas inlet at the upper end, a first gas outlet below the first gas inlet and a mechanical agitator. Furthermore, the facility has a degassing silo with a second chamber comprising a second polymer inlet, a second polymer outlet, a second gas inlet, and a second gas outlet. Said method comprises the following steps:
i) guiding a drying gas flow of a first gas mixture through the first gas inlet into the first chamber,
ii) insertion of wet polymer pellets through the first polymer inlet into said first chamber,
iii) drying the wet polymer pellets in a countercurrent provided by said drying gas flow and by using the mechanical agitator,
iv) transferring the dried polymer pellets through the first polymer outlet and the second polymer inlet into the second chamber,
v) guiding a second gas mixture through the second gas inlet into the second chamber,
vi) degassing the dried polymer pellets using the second gas flow and thereby transforming the second gas mixture into a third gas mixture comprising hydrocarbons, and
vii) guiding a portion of the third gas mixture into the first chamber,
the method being characterized in that the wet polymer pellets inserted into the first chamber in step ii) have a temperature of from 20°C to 80°C and the second gas mixture guided into the second chamber in step v) have a temperature of from 20°C to 80°C, and in that the dried polymer pellets having a reduced hydrocarbon content are withdrawn from the second chamber through the second polymer outlet and the dried polymer pellets withdrawn through the second polymer outlet have a temperature which is from 0.1°C to 20°C higher than the temperature of the second gas mixture guided into the second chamber.

In a first group of embodiments, the portion of the third gas mixture forms the first gas mixture and is guided through the first gas inlet into the first chamber.

In a second group of embodiments, the portion of the third gas mixture does not form the first gas mixture, but is added to the drying gas flow of the first gas mixture and is guided through the first gas into the first chamber.

In a third group of embodiments, the first chamber comprises a third gas inlet spaced apart from the first gas inlet and the portion of the third gas mixture is guided through said third gas inlet into the first chamber.

Preferably the third gas mixture comprises more hydrocarbons than the second gas mixture, wherein the hydrocarbons contain residual monomeric units of the polymer pellets.

In some embodiments, the polymer pellets are polyolefin pellets.

In some embodiments, the polymer of the polymer pellets is a low density polyethylene.

In some embodiments, the drying unit comprises a first separation unit having a separation sieve, wherein agglomerates and/or larger particles are removed using the separation sieve prior to insertion of the wet polymer pellets into the first chamber. In some of these embodiments, said first separation unit is placed adjacent to the first chamber being at least partially at the same height as the first gas outlet or as the first polymer outlet.

The drying gas becomes wet during the drying process. In some embodiments, the resulting wet gas mixture is guided to through the first gas outlet to a second separation unit and through the second separation unit to at least one suction fan, wherein the second separation unit is a cyclone separator, wherein said cyclone separator removes remaining polymer pellets, other particles or condensed fluid droplets, wherein the at least one suction fan sucks the wet gas from the first chamber and though the second separation unit.

In some embodiments, the first and/or third gas flow is heated prior to being guided into the first chamber using a heating unit. In some of these embodiments, said heating unit is a steam-operated heater.

In some embodiments, the first polymer inlet is arranged below the first gas outlet which is arranged below the first polymer outlet which is arranged below the first gas inlet.

In some embodiments, the wet pellets are conveyed by the process water of an underwater pellet cutter to be inserted into the first chamber in accordance with step ii).

In some embodiments, the dryer is a spin dryer, wherein moisture is removed by a centrifugal force as well as the drying gas flow.

In some embodiments, the first, second and third gas mixtures predominantly contain nitrogen and/or oxygen.

In some embodiments, the first gas inlet is arranged centrally at the upper end in such a way that the drying gas flow is directed towards the opposing bottom end.

The present disclosure also provides a process for manufacturing LDPE-pellets in an industrial plant, the industrial plant comprising a reactor for polymerization reactions, an extruder and the facility as described above. Thus, said facility also has a dryer with a first chamber comprising an upper and a lower end comprising a first polymer inlet, a first polymer outlet above the polymer inlet, a first gas inlet at the upper end, a first gas outlet below the first gas inlet and a mechanical agitator. Furthermore, the facility also has a degassing silo with a second chamber comprising a second polymer inlet, a second polymer outlet, a second gas inlet, and a second gas outlet. Said process comprises the steps of
a) polymerizing ethylene in the reactor at a temperature of 140 to 320°C and a pressure of 1400 to 3200 bar,
b) separating polymer and ethylene and recycling unreacted ethylene,
c) extruding the polymer to obtain a homogenized LDPE melt,
d) pelletizing the LDPE melt to obtain wet LDPE pellets using an underwater pellet cutter, and
e) drying and degassing said wet LDPE pellets using a method in accordance with one or several of the above-identified embodiments of drying methods.

### BRIEF DESCRIPTION OF THE DRAWINGS

In the figures:
Figure 1: shows a schematic view of an embodiment of the pellet dryer;
Figure 2: shows a schematic view of a first embodiment of the drying method for pellets;
Figure 3: shows a schematic view of a second embodiment of the drying method for pellets;
Figure 4: shows a schematic view of a process for manufacturing LDPE-pellets;
Figure 5: shows a schematic view of an embodiment of the mechanical agitator of the pellet dryer.

### DETAILED DESCRIPTION OF THE INVENTION

It is known in the art to prepare pellets using an extruder and cutting the extrusion strands into pellets in an underwater pellet cutter. The resulting pellets are wet. The water associated with said pellets is removed in a drier and for the preparation of dried polymer pellets it is known in the art to provide a drying system and a degassing system. With the present disclosure, it was found that the amount of contaminated gas to be disposed of, such as contaminated air, can be reduced if gas from the degassing silo is reused for the drying process as shall described hereinafter.

The present disclosure relates to the method for the preparation of dried polymer pellets in a facility, the facility having a dryer with a first chamber comprising an upper and a lower end comprising a first polymer inlet, a first polymer outlet above the polymer inlet, a first gas inlet at the upper end, a first gas outlet below the first gas inlet and a mechanical agitator, the facility further having a degassing silo with a second chamber comprising a second polymer inlet, a second polymer outlet, a second gas inlet, and a second gas outlet, the method comprising the following steps
i) guiding a drying gas flow comprising a first gas mixture through the first gas inlet into the first chamber, in particular downwards resulting in a helical flow,
ii) insertion of wet polymer pellets, preferably pellets coming of an underwater pellet cutter, through the first polymer inlet into the first chamber, preferably wherein the pellets are moved upwards using lifter blades of the mechanical agitator,
iii) drying the wet polymer pellets in a countercurrent provided by the drying gas flow and by using the mechanical agitator, in particular by a centrifugal force caused by the mechanical agitator,
iv) transferring the dried polymer pellets through the first polymer outlet and the second polymer inlet into the second chamber, in particular using a pipe connecting the first and second chamber,
v) guiding a second gas mixture through the second gas inlet into the second chamber, in particular gas provided by a supply line of an external source,
vi) degassing the dried polymer pellets using the second gas flow and thereby transforming the second gas mixture into a third gas mixture comprising hydrocarbons,
vii) guiding a portion of the third gas mixture into the first chamber, in particular in accordance with step i) and/or wherein the portion of the third gas mixture is the first gas mixture.

The drying process in accordance with the present disclosure relies on drying pellets in a countercurrent flow of said reused gas in combination with removal of liquid using centrifugal forces caused by the mechanical agitator. Furthermore, some of the heat from the degassing silo can be used in the first chamber of the dryer, reducing energy costs. It was also surprisingly found that although hydrocarbons from the degassing silo are introduced into the drying gas for the dryer this does not adversely affect safety or the efficiency of drying.

It should be understood that the use of "and/or" is defined inclusively, such that the term "a and/or b" should be read to include the sets: "a and b", "a or b", "a", "b". Preferably and in most cases "a and/or b" relates to two entities "a" and "b", wherein at least one of said entities is present in the embodiment described.

It should be understood that a pellet is a particle that may have any shape or size. However, preferably it is a particle that has a rounded, spherical, or cylindrical body. Preferably the size is of a pellet in the range of 0,05 mm to 25 mm, in particular 0,1 mm to 10 mm, preferably 0,5 mm to 4 mm.

It should be understood that the term "dried" or "drying" refers to the removal of a diluent, which may be any liquid, such as a hydrocarbon liquid or water. Preferably the liquid is water, in particular water of an underwater pellet cutter. The term wet refers to the presence of significant amounts of liquid. Thus, wet pellets are contaminated with more liquid than dried pellets. By removing this moisture, the pellets are dried.

It should be understood that the term "degassing" or "degassed" refers to the removal of unreacted monomers and other hydrocarbon compounds from particulate polymer. The polymer products obtained by a polymerization, e.g. as polymer pellets, may contain such unreacted monomers and other hydrocarbon compounds (for example, the principal monomer like ethylene, comonomer(s), oligomers, solvents, polymerization additives like molecular weight regulators, impurities present in any of the materials used in the polymerization, materials employed for lubricating moving parts of the reactors, etc.) and these substances should be removed from the polymer product since failure to do so may lead to hydrocarbons levels rising to explosive levels in downstream equipment, or to environmental constraints being exceeded, or to unacceptable product quality such as odors. A common practice for degassing is contacting the particulate polymer with a stream of an inert gas, usually in countercurrent flow.

It should be understood that the term gas mixture relates to a mixture of different gases, e.g. nitrogen and a hydrocarbon gas. Preferably each gas mixture as described hereinafter contains air. It also may contain additional gases, such as a hydrocarbon gas, preferably ethylene.

It should be understood that an underwater pellet cutter is a cutting device that cuts polymer strand under water into pellets. It comprises an underwater pellet cutting chamber and is part of an underwater pelletizer. The water used in the cutter is called process water. Said process water transports the pellets and also ensures cooling of the pellets as soon as they have been cut. Preferably the wet pellets are conveyed by the process water of an underwater pellet cutter to be inserted into the first chamber in accordance with step ii).

It should be understood that "up", "down", "lower", "upper", "below", "above" and similar terms indicate a direction aligned with the direction of the force of gravity if the facility is set up correctly in an operational condition, e.g. within an industrial plant. "Above" and "below" does indicate a difference in height, i.e. above means further up and below means further down. It does not indicate that said elements must lie on top of each other, e.g. in a superimposing manner. That means a polymer inlet can be arranged below a polymer outlet, wherein the polymer inlet and outlet are arranged at opposing walls of a chamber provided that the polymer inlet is arranged at a lower height. Height is also measured along the direction of the force of gravity if the facility is set up correctly in an operational condition.

In the first group of embodiments, the portion of the third gas mixture forms the first gas mixture and is guided through the first gas inlet into the first chamber. It has been found that in this case no external air is required and the third gas mixture leaving the degassing silo provides sufficient drying air for the dryer. In this case, usually not all of the gas leaving the degassing silo is used for the dryer. Some of the third gas mixture is discarded. However, a portion of the third gas mixture is used as drying gas and forms the first gas mixture, i.e. no other gas mixture is added to the above-mentioned portion of third gas mixture in order to form the first gas mixture. This embodiment was found to be particularly preferred as the amount of waste gas is reduced most and still a highly efficient drying process is achieved. Surprisingly, it was found that the exhaust gas obtained from the degassing process (portion of the third gas mixture) is fully sufficient to supply the drying process with a drying gas.

In the second group of embodiments, the portion of the third gas mixture does not form the first gas mixture, but is added to the drying gas flow of the first gas mixture and is guided through the first gas into the first chamber. In this case, the portion of the third gas mixture does not by itself form the first gas mixture, but it is added to the drying gas flow and thus forms a portion of the first gas mixture. It was found that a slightly higher reliability of a continuous first gas stream may be achieved if the gas is not only branched off from the degassing silo, but some other gas is added, too.

In the third group of embodiments, the first chamber comprises a third gas inlet spaced apart from the first gas inlet and the portion of the third gas mixture is guided through said third gas inlet into the first chamber. This can be beneficial as a regulation of the amount of first and third gas mixture is facilitated.

It should be understood that the first, second and third group of embodiments, in particular the first group of embodiments, can be combined with any embodiments discussed hereinafter.

Preferably the third gas mixture comprises more hydrocarbons than the second gas mixture, wherein the hydrocarbons contain residual monomeric units of the polymer forming the polymer pellets. The second gas mixture is in some embodiments only air, in particular air supplied by an external source. When said second gas mixture enters the second chamber the composition changes to a third gas mixture. Preferably the difference in composition between the second and third gas mixture can be attributed to residual monomeric units of said polymer and/or other hydrocarbon gases that have been added to the second mixture during the degassing process.

In some embodiments, the polymer of the polymer pellets is polyethylene or ethylene vinyl acetate copolymers, preferably polyethylene. It was found that the above described drying process works particularly well for low density polyethylene. Low density polyethylene is often abbreviated as LDPE within this disclosure.

In some embodiments, the drying unit comprises a first separation unit having a separation sieve, wherein agglomerates and/or larger particles are removed using the separation sieve prior to insertion of the wet polymer pellets into the first chamber. It was found that removing agglomerates and/or larger particles increases the speed of the drying process and prevents mechanical blockage. In some of these embodiments, this first separation unit is placed adjacent to the first chamber being at least partially at the same height as the first gas outlet or as the first polymer outlet. It was found that introducing polymer pellets into the first chamber is facilitated.

The drying gas becomes wet during the drying process. In some embodiments, the resulting wet gas mixture is guided to through the first gas outlet to a second separation unit and through the second separation unit to at least one suction fan, wherein the second separation unit is a cyclone separator, wherein said cyclone separator removes remaining polymer pellets, other particles or condensed fluid droplets, wherein the at least one suction fan sucks the wet gas from the first chamber and though the second separation unit. The separation unit protects the suction fan from said remaining polymer pellets, other particles or condensed fluid droplets. Additionally, it is prevented that said particles are transferred to a waste gas treatment unit, preferably a regenerative thermal oxidizer.

In some embodiments that comprise the above mentioned second separation unit the cyclone separator is equipped with a water connection for cleaning purposes, wherein the water is introduced through a restriction orifice of the cyclone separator. Preferably the restriction orifice has a smaller diameter than the internal pipe diameter of the feeding line. This limits the feed of water which prevents damage to the cyclone. This solution was found to be safer than regulating the feed by the quantities of water transferred within the pipe of the feeding line. For additional security at high levels of water a feeding valve is closed automatically. This combination resulted in a particularly reliable cyclone separator construction.

A mechanical agitator in accordance with the present disclosure may in some embodiments be a sectional rotor with a modular design or a one-piece rotor with a solid rotor shaft.

In some embodiments, the first and/or third gas flow is heated prior to being guided into the first chamber using a heating unit. The heating of the first and/or third gas flow ensures a highly efficient drying. In some of those embodiments, said heating unit is a steam-operated heater or a water-operated heater. Particularly preferred is a low pressure steam-operated heater. It was surprisingly found that these heaters can be used to ensure a high degree of safety when warming the portion of third gas mixture, in particular a third gas mixture containing oxygen and hydrocarbons such as ethylene. When a mixture of hydrocarbons and oxygens are heated too much there is an inherent danger of explosion. If the heating pipe is too cold there is no danger of explosion, however, efficiency of drying in the first chamber is not high enough. Thus, the temperature has to be selected carefully. It was found that with low pressure steam-operated heaters a suitable temperature is achieved with a high degree of safety.

In some embodiments, the first polymer inlet is arranged below the first gas outlet which is arranged below the first polymer outlet which is arranged below the first gas inlet. It was found that this arrangement is particularly beneficial. The pellets are introduced lowest from the discussed inlets and outlets. The pellets have a high degree of wetness and the dryer has less moisture in higher regions.

In some embodiments, the first polymer outlet is arranged at a distance above the first gas outlet in such a way the first gas inlet and the first polymer outlet are farther away than said distance. It was found that this arrangement on the one side effectively prevents wet gas form accompanying polymer pellets when leaving through the first polymer outlet and on the other side wet air can be removed through the first gas outlet without too many polymer pellets being removed with the wet gas, in particular wet air.

In some embodiments, the dryer is a spin dryer, wherein moisture is removed by a centrifugal force as well as the drying gas flow. It was found that the method is particularly effective in combination with such a dryer. Preferably the drying comprises a mechanical agitator that has rotor lifter blades, which are designed and configured to lift the pellets upwards, preferably in a helical movement. Excess moisture is largely removed by centrifugal forces. Preferably, a screen is provided that prevents that pellets are removed with the liquid, in particular a screen that is a sieve, preferably a metal sieve.

The degassing silo is in one embodiment charged continuously with pellets. However, it was found that even if the pellets are inserted discontinuously the method as described above can be carried out. Thus, in another embodiment, the degassing silo is charged discontinuously with pellets. Preferably the degassing air, i.e. the second gas mixture, is inserted continuously into the degassing silo in both of the above described embodiments.

The second gas mixture guided into the second chamber in step v) is brought to a temperature of from 20°C to 80°C, preferably from 30°C to 70°C, and more preferably from 40C to 60°C before being inserted into the second chamber, and the wet polymer pellets inserted into the first chamber in step ii) have a temperature of from 20°C to 80°C, preferably from 30°C to 70°C, and more preferably from 40C to 60°C.

The dried polymer pellets having a reduced hydrocarbon content are withdrawn from the second chamber through the second polymer outlet, wherein the withdrawn polymer pellets have a temperature which is from 0.1°C to 20°C, preferably from 0.5°C to 15°C, and more preferably from 1°C to 10°C higher than the temperature of the second gas mixture guided into the second chamber.

In some embodiments of the degassing silo, the second polymer inlet is above the second polymer outlet and a second gas inlet is arranged below the second gas outlet. Preferably there are multiple second gas inlets arranged below a single second gas outlet. In a particularly preferred embodiment, a second gas outlet is arranged at the top of the degassing silo, a second polymer outlet is arranged below the second gas outlet and at the bottom a second polymer outlet is arranged below multiple second gas inlets.

In some embodiments, the first, second and third gas mixtures predominantly contain nitrogen and/or oxygen. It is particularly preferred if the first, second and third gas mixtures predominantly contain air. There may be additional gases present, in particular in the first and/or third gas mixture, such as hydrocarbons originating from the degassing process. It was found that air is a cheap, safe and effective drying agent for the method according to the present disclosure despite the danger of a reaction between oxygen and hydrocarbons.

The method of the present disclosure is preferably carried out for preparing dried polyolefin pellets. Preferred polyolefins are obtained by homopolymerizing or copolymerizing 1-olefins, i.e. hydrocarbons having terminal double bonds. Preference is given to nonpolar olefinic compounds. Particularly preferred 1-olefins are linear or branched C₂-C₁₂-1-alkenes, in particular linear C₂-C₁₀-1-alkenes such as ethylene, propylene, 1-butene, 1-pentene, 1-hexene, 1-heptene, 1 octene, 1-decene or branched C₂-C₁₀-1-alkenes such as 4-methyl-1-pentene, conjugated and nonconjugated dienes such as 1,3-butadiene, 1,4-hexadiene or 1,7-octadiene. It is also possible to polymerize mixtures of various 1-olefins. Suitable olefins also include ones in which the double bond is part of a cyclic structure which can have one or more ring systems. Examples are cyclopentene, norbornene, tetracyclododecene or methylnorbornene or dienes such as 5-ethylidene-2-norbornene, norbornadiene or ethylnorbornadiene. It is also possible to polymerize mixtures of two or more olefins.

Preferred polymers for the method of the present disclosure are polyethylenes having an ethylene content of from 50 to 100 wt.%, more preferably from 80 to 100 wt.%, and in particular from 98 to 100 wt.%. Accordingly, the content of other olefins in the polyethylenes is preferably from 0 to 50 wt.%, more preferably from 0 to 20 wt.%, and in particular from 0 to 2 wt.%.

The preferred density of polyethylenes for the method of the present disclosure ranges from 0.90 g/cm³ to 0.97 g/cm³. Preferably the density is in the range of from 0.90 to 0.95 g/cm³ and especially in the range of from 0.91 to 0.94 g/cm³. The density has to be understood as being the density determined according to DIN EN ISO 1183-1:2004, Method A (Immersion) with compression molded plaques of 2 mm thickness which were pressed at 180°C, 20MPa for 8 minutes with subsequent crystallization in boiling water for 30 minutes.

In some embodiments, the first gas inlet is arranged centrally at the upper end in such a way that the drying gas flow is directed towards the opposing bottom end. It was found that this arrangement provides a strong countercurrent of drying gas to polymer pellets that move upwards within the drying chamber. Pointing downwards towards the opposing bottom end is preferably a vertical direction downwards. However, it is also possible to select a downward direction that is not exactly vertical, e.g. to support the movement of polymer pellets through the first polymer outlet.

In some embodiments, the drying gas flow is directed downwards along a helical pathway. It was found that the drying process is particularly effective in this case.

Preferably the portion of the third gas mixture relates to 1 to 90% of the amount of second gas mixture, preferably 10 to 80%, in particular 20 to 60%.

The present disclosure also provides a process for manufacturing LDPE-pellets in an industrial plant, the industrial plant comprising a reactor for polymerization reactions, an extruder and the facility as described above. Thus, said facility also has a dryer with a first chamber comprising an upper and a lower end with a first polymer inlet, a first polymer outlet above the polymer inlet, a first gas inlet at the upper end, a first gas outlet below the first gas inlet and a mechanical agitator. Furthermore, the facility also has a degassing silo with a second chamber comprising a second polymer inlet, a second polymer outlet, a second gas inlet, and a second gas outlet. Said process comprises the steps of
a) polymerizing ethylene in the reactor at a temperature of 140 to 320°C and a pressure of 1400 to 3200 bar,
b) separating polymer and ethylene and recycling unreacted ethylene,
c) extruding the polymer to obtain a homogenized LDPE melt,
d) pelletizing the LDPE melt to obtain wet LDPE pellets using an underwater pellet cutter, and
e) drying and degassing said wet LDPE pellets using a method in accordance with one or several of the above discussed embodiments of drying methods.

It was found the above process of manufacturing low density polyethylene pellets (LDPE-pellets) is particularly effective in combination with the aforementioned drying method.

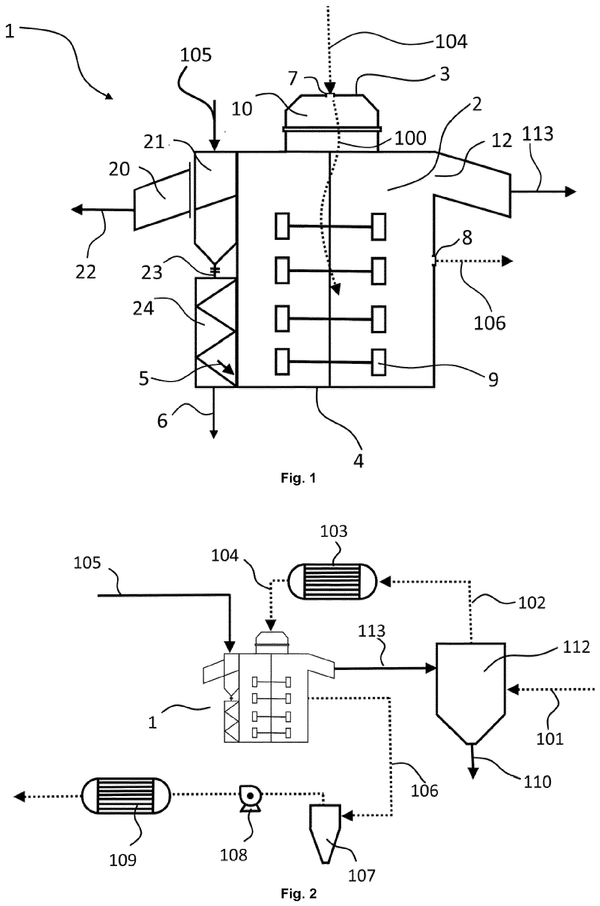

Figure 1 shows a preferred embodiment of the dryer (1) for drying polymer pellets. The dryer (1) has a first chamber (2) with an upper end (3) and a lower end (4) comprising a first polymer inlet (5), a first polymer outlet (12) above the polymer inlet (5), a first gas inlet (7) at the upper end (3), a first gas outlet (8) for wet gas (106) below the first gas inlet (7) and a mechanical agitator (9). The first gas inlet (7) is arranged in a top part (10) of the dryer (1) and designed to receive a first gas mixture (104). Said first gas mixture (104) causes a drying gas flow (100) within the first chamber (2).

The dryer (1) is designed to receive wet polymer pellets or a suspension of pellets in a liquid such as water (105). The pellets are freed of agglomerates and/or larger particles in a chamber (21). Said agglomerates and/or larger particles leave through an exit port (20) towards a waste unit (22), whereas pellets drop though a separation sieve and an inlet (23) to a chute (24) for inserting the polymer pellets through the first polymer inlet (5). When providing the dryer (1) with a suspension of pellets in a liquid (105), the pellets and the liquid are separated and a flow of liquid (6) exits the dryer (1) at the bottom.

When using this facility, the drying gas flow (100) comprising a first gas mixture is led through the first gas inlet (7) into the first chamber (2). Wet polymer pellets are inserted through the first polymer inlet (5) into the first chamber (2). When the mechanical agitator (9) rotates, pellets are transported upwards to the first polymer outlet (12). During said transport liquid is removed by a centrifugal force caused by the mechanical agitator (9). Additionally, the wet polymer pellets are dried in a countercurrent provided by the drying gas flow (100). The first polymer outlet (12) leads to a duct that transports the dried polymer (113) to the degassing silo (112, not shown).

Figure 2 shows a schematic view of a first embodiment of the drying method for pellets. The dryer (1) is discussed in conjunction with Figure 1 in detail. The method comprises the steps of guiding a drying gas flow (not shown) of a first gas mixture (104) into the first chamber of the dryer (1). Wet polymer pellets or a suspension of polymer pellets in a liquid (105) are transported into said dryer (1). The drying gas becomes wet and the resulting wet gas (106) leaves the dryer (1). It is forwarded to a cyclone separator (107) wherein residual pellets, particles and droplets are removed. The gas is sucked from the first chamber using a suction fan (108). Afterwards it is heated using a second heating unit (109) that is a steam-operated heater before being transported to a waste gas treatment unit, preferably a regenerative thermal oxidation plant.

Dried polymer (113) is transported through a second polymer inlet into the second chamber (112) of a degassing silo, which is connected to a feed of a second gas mixture (101). Dry and degassed polymer (110) leaves the degassing silo through a second polymer outlet. A third gas mixture (102) is obtained by adding hydrocarbons from the degassing process to the second gas mixture (101). A portion of the third gas mixture (102) is heated in a first heating unit that is a steam-operated heater (103) and forms the first gas mixture (104), i.e. in this embodiment, there is no difference between first gas mixture (104) and the portion of the third gas mixture (102). The other portion of the third gas mixture (not shown) that is not used as a first gas mixture may be transported to a waste gas treatment unit, preferably a regenerative thermal oxidizer.

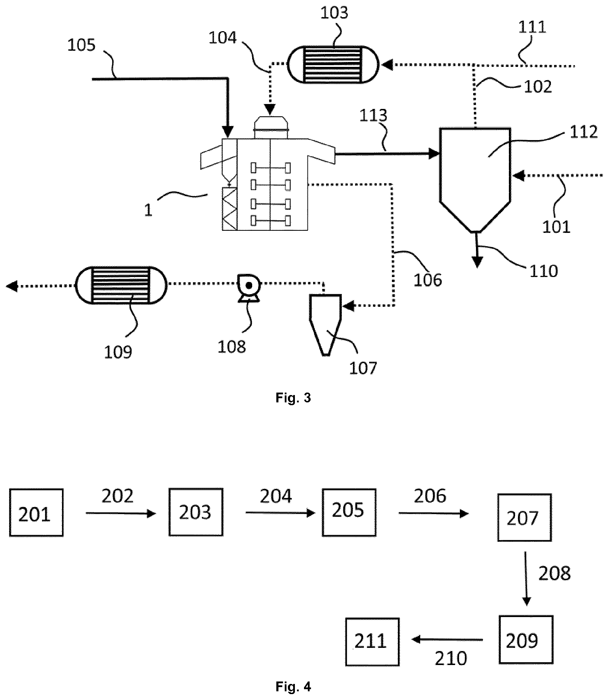

Figure 3 shows an alternative embodiment of the drying method for pellets, wherein the dryer of Figure 1 also may be used. The method comprises the steps of guiding a drying gas flow (not shown) of a first gas mixture (104) into the first chamber of the dryer (1). Wet polymer pellets (105) are dried in said dryer (1). The drying gas becomes wet and wet gas (106) leaves the dryer (1). It is forwarded to a cyclone separator (107) wherein residual pellets, particles and droplets are removed. The gas is sucked from the first chamber using a suction fan (108). Afterwards it is heated using a second heating unit (109) that is a steam-operated heater before being transported to a waste gas treatment unit, preferably a regenerative thermal oxidation plant.

Dried polymer (113) is transported through a second polymer inlet into the second chamber (112) of a degassing silo, which is connected to a feed of a second gas mixture (101). Dry and degassed polymer (110) leaves the degassing silo through a second polymer outlet and a portion of the third gas mixture (111) is routed to the first chamber. The embodiment of Figure 3 differs from the embodiment of Figure 2 in that the third gas mixture (102) is not identical with the first gas mixture (104). Instead an external gas feed (111) is provided to which said portion of the third gas mixture (102) is added and thus the combination of said mixtures result in the first gas mixture (104) that is guided into the first chamber. In this embodiment, the portion of third gas mixture (102) has a higher hydrocarbon content than the first gas mixture (104). The portion of the third gas mixture that is not used may be transported to a waste gas treatment unit, preferably a regenerative thermal oxidizer.

Figure 4 shows a schematic view of the process for manufacturing LDPE-pellets in an industrial plant, the industrial plant comprising a reactor for polymerization reactions, an extruder and a facility, wherein the facility has a dryer and a degassing silo as described above. In a first step (201) ethylene is polymerized in the reactor at a temperature of 140 to 320°C and a pressure of 1400 to 3200 bar. Afterwards the obtained polymers are transferred (202) to a separation unit (203) and ethylene and polymer are separated in said separation unit (203). A full separation is usually not possible and thus some hydrocarbon gases remain. The degassed polymers are transported (204) to an extruder (205) in order to obtain LDPE-extrudates. Said extrudates are transported (206) to a pelletizer (207). Afterward the wet pellets are transported (208) to the dryer (209), e.g. the dryer of Figure 1, and subsequently transported (210) to the degasser unit (211).

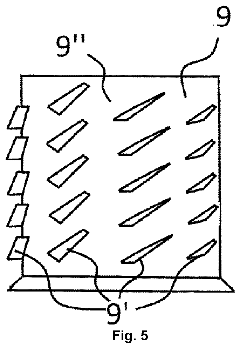

Figure 5 shows a perspective view of an embodiment of the mechanical agitator (9). Said agitator has a plurality of identical rotor lifter blades (9') that carry pellets upwards. Said rotor lifter blades are arranged around a central shaft (9"). Other embodiments are possible wherein the shaft is segmented into several pieces. Speed of rotation and shape of the rotor lifter blades move the pellets upwards within the first chamber in a helical pathway.

## Claims

1. A method for the preparation of dried polymer pellets having a reduced hydrocarbon content in a facility,
the facility having a dryer with a first chamber comprising an upper and a lower end comprising a first polymer inlet, a first polymer outlet above the polymer inlet, a first gas inlet at the upper end, a first gas outlet below the first gas inlet and a mechanical agitator,
the facility further having a degassing silo with a second chamber comprising a second polymer inlet, a second polymer outlet, a second gas inlet, and a second gas outlet,
the method comprising the following steps
i) guiding a drying gas flow comprising a first gas mixture through the first gas inlet into the first chamber,
ii) inserting wet polymer pellets through the first polymer inlet into the first chamber,
iii) drying the wet polymer pellets in a countercurrent provided by the drying gas flow and by using the mechanical agitator,
iv) transferring the dried polymer pellets through the first polymer outlet and the second polymer inlet into the second chamber,
v) guiding a second gas mixture through the second gas inlet into the second chamber,
vi) degassing the dried polymer pellets using the second gas flow and thereby transforming the second gas mixture into a third gas mixture comprising hydrocarbons,
vii) guiding a portion of the third gas mixture into the first chamber,
the method being **characterized in that** the wet polymer pellets inserted into the first chamber in step ii) have a temperature of from 20°C to 80°C and the second gas mixture guided into the second chamber in step v) have a temperature of from 20°C to 80°C, and **in that** the dried polymer pellets having a reduced hydrocarbon content are withdrawn from the second chamber through the second polymer outlet and the dried polymer pellets withdrawn through the second polymer outlet have a temperature which is from 0.1°C to 20°C higher than the temperature of the second gas mixture guided into the second chamber.

2. The method according to claim 1, wherein the portion of the third gas mixture forms the first gas mixture and is guided through the first gas inlet into the first chamber, or
wherein the portion of the third gas mixture does not form the first gas mixture, but is added to the drying gas flow of the first gas mixture and is guided through the first gas inlet into the first chamber, or
wherein the first chamber comprises a third gas inlet spaced apart from the first gas inlet and the portion of the third gas mixture is guided through said third gas inlet into the first chamber.

3. The method according to any of the preceding claims, wherein the polymer pellets are polyolefin pellets.

4. The method according to any of the preceding claims, wherein the polymer pellets are made from low density polyethylene.

5. The method according to any of the preceding claims, wherein the drying unit comprises a first separation unit having a separation sieve, wherein agglomerates are removed using the separation sieve prior to insertion of the wet polymer pellets into the first chamber.

6. The method according to claim 5, wherein the first separation unit is placed adjacent to the first chamber being at least partially at the same height as the first gas outlet or as the first polymer outlet.

7. The method according to any of the preceding claims, wherein
the drying gas flow becomes wet during the drying process and the resulting wet gas mixture is guided to through the first gas outlet to a second separation unit and through the second separation unit to at least one suction fan,
wherein the second separation unit is a cyclone separator, wherein said cyclone separator removes remaining polymer pellets, other particles or condensed fluid droplets,
wherein the at least one suction fan sucks the wet gas from the first chamber and though the second separation unit.

8. The method according to any of the preceding claims, wherein the first and/or third gas flow is heated prior to being guided into the first chamber using a first heating unit.

9. The method according to claim 8, wherein the first heating unit is a steam-operated heater.

10. The method according to any of the preceding claims, wherein the wet pellets are conveyed by the process water of an underwater pellet cutter to be inserted into the first chamber in accordance with step ii).

11. The method according to any of the preceding claims, wherein the first, second and third gas mixtures predominantly contain nitrogen and/or oxygen.

12. The method according to any of the preceding claims, wherein the first gas inlet is arranged centrally at the upper end in such a way that the drying gas flow is directed towards the opposing bottom end.

13. A process for manufacturing LDPE-pellets in an industrial plant, the industrial plant comprising a reactor for polymerization reactions, an extruder and a facility,
wherein the facility has a dryer with a first chamber comprising an upper and a lower end comprising a first polymer inlet, a first polymer outlet above the polymer inlet, a first gas inlet at the upper end, a first gas outlet below the first gas inlet and a mechanical agitator,
the facility further having a degassing silo with a second chamber comprising a second polymer inlet, a second polymer outlet, a second gas inlet, and a second gas outlet,
the process comprising the steps of
a) polymerizing ethylene in the reactor at a temperature of 140 to 320°C and a pressure of 1400 to 3200 bar,
b) separating polymer and ethylene and recycling unreacted ethylene,
c) extruding the polymer to obtain a homogenized LDPE melt,
d) pelletizing the LDPE melt to obtain wet LDPE pellets using an underwater pellet cutter, and
e) drying and degassing said wet LDPE pellets using a method according to any of the preceding claims 1 to 12.

## Patentansprüche

1. Verfahren zur Herstellung von getrockneten Polymerpellets mit reduziertem Kohlenwasserstoffgehalt in einer Einrichtung;
wobei die Einrichtung einen Trockner mit einer ersten Kammer aufweist, die ein oberes und ein unteres Ende umfasst, umfassend einen ersten Polymereinlass, einen ersten Polymerauslass oberhalb des Polymereinlasses, einen ersten Gaseinlass an dem oberen Ende, einen ersten Gasauslass unterhalb des ersten Gaseinlasses und ein mechanisches Rührwerk,
die Einrichtung des Weiteren ein Entgasungssilo mit einer zweiten Kammer aufweist, umfassend einen zweiten Polymereinlass, einen zweiten Polymerauslass, einen zweiten Gaseinlass und einen zweiten Gasauslass,
wobei das Verfahren die folgenden Schritte umfasst:
i) Führen eines Trocknungsgasflusses, umfassend eine erste Gasmischung, durch den ersten Gaseinlass in die erste Kammer,
ii) Einbringen von feuchten Polymerpellets durch den ersten Polymereinlass in die erste Kammer,
iii) Trocknen der feuchten Polymerpellets im Gegenstrom, der durch den Trocknungsgasfluss bereitgestellt wird, und unter Verwendung des mechanischen Rührwerks,
iv) Überführen der getrockneten Polymerpellets durch den ersten Polymerauslass und den zweiten Polymereinlass in die zweite Kammer,
v) Führen einer zweiten Gasmischung durch den zweiten Gaseinlass in die zweite Kammer,
vi) Entgasen der getrockneten Polymerpellets unter Verwendung des zweiten Gasflusses, und dadurch Umwandeln der zweiten Gasmischung in eine dritte Gasmischung, die Kohlenwasserstoffe umfasst,
vii) Führen eines Teils der dritten Gasmischung in die erste Kammer,
wobei das Verfahren **dadurch gekennzeichnet ist, dass** die feuchten Polymerpellets, die in Schritt ii) in die erste Kammer eingebracht werden, eine Temperatur von 20 °C bis 80 °C aufweisen, und die zweite Gasmischung, die in Schritt v) in die zweite Kammer geführt wird, eine Temperatur von 20 °C bis 80 °C aufweist, und
dass die getrockneten Polymerpellets mit einem reduzierten Kohlenwasserstoffgehalt aus der zweiten Kammer durch den zweiten Polymerauslass abgezogen werden, und die durch den zweiten Polymerauslass abgezogenen getrockneten Polymerpellets eine Temperatur aufweisen, die 0,1 °C bis 20 °C höher als die Temperatur der zweiten Gasmischung ist, die in die zweite Kammer geführt wird.

2. Verfahren nach Anspruch 1, wobei der Teil der dritten Gasmischung die erste Gasmischung bildet und durch den ersten Gaseinlass in die erste Kammer geführt wird, oder
wobei der Teil der dritten Gasmischung nicht die erste Gasmischung bildet, jedoch dem Trocknungsgasfluss der ersten Gasmischung zugefügt wird und durch den ersten Gaseinlass in die erste Kammer geführt wird, oder
wobei die erste Kammer einen dritten Gaseinlass umfasst, der von dem ersten Gaseinlass beabstandet ist, und der Teil der dritten Gasmischung durch den dritten Gaseinlass in die erste Kammer geführt wird.

3. Verfahren nach einem der vorhergehenden Ansprüche, wobei die Polymerpellets Polyolefinpellets sind.

4. Verfahren nach einem der vorhergehenden Ansprüche, wobei die Polymerpellets aus Polyethylen mit niedriger Dichte gefertigt sind.

5. Verfahren nach einem der vorhergehenden Ansprüche, wobei die Trocknungseinheit eine erste Abscheideeinheit mit einem Abscheidesieb umfasst, wobei Agglomerate unter Verwendung des Abscheidesiebs entfernt werden, bevor die feuchten Polymerpellets in die erste Kammer eingebracht werden.

6. Verfahren nach Anspruch 5, wobei die erste Abscheideeinheit benachbart zu der ersten Kammer platziert wird, die mindestens teilweise auf derselben Höhe wie der erste Gasauslass oder der erste Polymerauslass ist.

7. Verfahren nach einem der vorhergehenden Ansprüche, wobei:
der Trocknungsgasfluss während des Trocknungsprozesses feucht wird, und die resultierende feuchte Gasmischung durch den ersten Gasauslass zu einer zweiten Abscheideeinheit und durch die zweite Abscheideeinheit zu mindestens einem Sauggebläse geführt wird,
wobei die zweite Abscheideeinheit ein Zyklonabscheider ist, wobei der Zyklonabscheider Polymerpellets, sonstige Partikel oder kondensierte Fluidtröpfchen entfernt,
wobei das mindestens eine Sauggebläse das feuchte Gas aus der ersten Kammer und durch die zweite Abscheideeinheit saugt.

8. Verfahren nach einem der vorhergehenden Ansprüche, wobei der erste und/oder dritte Gasfluss unter Verwendung einer ersten Heizeinheit erwärmt wird, bevor er in die erste Kammer geführt wird.

9. Verfahren nach Anspruch 8, wobei die erste Heizeinheit ein dampfbetriebener Heizer ist.

10. Verfahren nach einem der vorhergehenden Ansprüche, wobei die feuchten Pellets durch das Prozesswasser einer Unterwassergranuliervorrichtung transportiert werden, um in die erste Kammer gemäß Schritt ii) eingebracht zu werden.

11. Verfahren nach einem der vorhergehenden Ansprüche, wobei die erste, zweite und dritte Gasmischung vorwiegend Stickstoff und/oder Sauerstoff enthalten.

12. Verfahren nach einem der vorhergehenden Ansprüche, wobei der erste Gaseinlass zentral an dem oberen Ende so angeordnet ist, dass der Trocknungsgasfluss auf das gegenüber liegende untere Ende gerichtet ist.

13. Prozess zur Fertigung von LDPE-Pellets in einer Industrieanlage, wobei die Industrieanlage einen Reaktor für Polymerisationsreaktionen, einen Extruder und eine Einrichtung umfasst,
wobei die Einrichtung einen Trockner mit einer ersten Kammer aufweist, die ein oberes und ein unteres Ende umfasst, umfassend einen ersten Polymereinlass, einen ersten Polymerauslass oberhalb des Polymereinlasses, einen ersten Gaseinlass an dem oberen Ende, einen ersten Gasauslass unterhalb des ersten Gaseinlasses und ein mechanisches Rührwerk,
die Einrichtung des Weiteren ein Entgasungssilo mit einer zweiten Kammer aufweist, umfassend einen zweiten Polymereinlass, einen zweiten Polymerauslass, einen zweiten Gaseinlass und einen zweiten Gasauslass,
wobei das Verfahren die Schritte umfasst:
a) Polymerisieren von Ethylen in dem Reaktor bei einer Temperatur von 140 bis 320 °C und einem Druck von 1400 bis 3200 bar,
b) Trennen von Polymer und Ethylen, und Rückführen von nicht-umgesetztem Ethylen,
c) Extrudieren des Polymers, um eine homogenisierte LDPE-Schmelze zu erhalten,
d) Pelletieren der LDPE-Schmelze, um feuchte LDPE-Pellets zu erhalten, unter Verwendung einer Unterwassergranuliervorrichtung, und
e) Trocknen und Entgasen der feuchten LDPE-Pellets unter Verwendung eines Verfahrens gemäß einem der vorhergehenden Ansprüche 1 bis 12.

## Revendications

1. Procédé de préparation de granulés de polymère séchés présentant une teneur en hydrocarbures réduite dans une installation,
l'installation comprenant un sécheur pourvu d'une première chambre comprenant une extrémité supérieure et une extrémité inférieure, comprenant une première entrée de polymère, une première sortie de polymère au-dessus de l'entrée de polymère, une première entrée de gaz au niveau de l'extrémité supérieure, une première sortie de gaz au-dessous de la première entrée de gaz et un agitateur mécanique,
l'installation comprenant en outre un silo de dégazage pourvu d'une deuxième chambre comprenant une deuxième entrée de polymère, une deuxième sortie de polymère, une deuxième entrée de gaz et une deuxième sortie de gaz,
le procédé comprenant les étapes suivantes
i) guider un flux de gaz de séchage comprenant un premier mélange gazeux à travers la première entrée de gaz dans la première chambre,
ii) introduire des granulés de polymère humides à travers la première entrée de polymère dans la première chambre,
iii) sécher les granulés de polymère humides dans un contre-courant réalisé par le flux de gaz de séchage et à l'aide de l'agitateur mécanique,
iv) transférer les granulés de polymère séchés à travers la première sortie de polymère et la deuxième entrée de polymère dans la deuxième chambre,
v) guider un deuxième mélange gazeux à travers la deuxième entrée de gaz dans la deuxième chambre,
vi) dégazer les granulés de polymère séchés à l'aide du deuxième flux de gaz et transformer ainsi le deuxième mélange gazeux en un troisième mélange gazeux comprenant des hydrocarbures,
vii) guider une partie du troisième mélange gazeux dans la première chambre,
le procédé étant **caractérisé en ce que** les granulés de polymère humides introduits dans la première chambre dans l'étape ii) présentent une température de 20°C à 80°C et le deuxième mélange gazeux guidé dans la deuxième chambre dans l'étape v) présente une température de 20°C à 80°C et
**en ce que** les granulés de polymère séchés présentant une teneur en hydrocarbures réduite sont soutirés de la deuxième chambre à travers la deuxième sortie de polymère et les granulés de polymère séchés soutirés à travers la deuxième sortie de polymère présentent une température qui est de 0,1°C à 20°C supérieure à la température du deuxième mélange gazeux guidé dans la deuxième chambre.

2. Procédé selon la revendication 1, la partie du troisième mélange gazeux formant le premier mélange gazeux et étant guidée à travers la première entrée de gaz dans la première chambre ou
la partie du troisième mélange gazeux ne formant pas le premier mélange gazeux, mais étant ajouté au flux de gaz de séchage du premier mélange gazeux et étant guidé à travers la première entrée de gaz dans la première chambre ou
la première chambre comprenant une troisième entrée de gaz écartée de la première entrée de gaz et la partie du troisième mélange gazeux étant guidée à travers ladite troisième entrée de gaz dans la première chambre.

3. Procédé selon l'une quelconque des revendications précédentes, les granulés de polymère étant des granulés de polyoléfine.

4. Procédé selon l'une quelconque des revendications précédentes, les granulés de polymère étant préparés à partir de polyéthylène basse densité.

5. Procédé selon l'une quelconque des revendications précédentes, l'unité de séchage comprenant une première unité de séparation présentant un tamis de séparation, les agglomérats étant éliminés à l'aide du tamis de séparation avant l'introduction des granulés de polymère humides dans la première chambre.

6. Procédé selon la revendication 5, la première unité de séparation étant placée à côté de la première chambre et se trouvant au moins partiellement à la même hauteur que la première sortie de gaz ou que la première sortie de polymère.

7. Procédé selon l'une quelconque des revendications précédentes,
le flux de gaz de séchage devenant humide pendant le processus de séchage et le mélange gazeux humide résultant étant guidé à travers la première sortie de gaz vers une deuxième unité de séparation et à travers la deuxième unité de séparation vers au moins un ventilateur d'aspiration,
la deuxième unité de séparation étant un séparateur à cyclone, ledit séparateur à cyclone éliminant les granulés de polymère restants, d'autres particules ou des gouttelettes de fluide condensé,
ledit au moins un ventilateur d'aspiration aspirant le gaz humide de la première chambre et à travers la deuxième unité de séparation.

8. Procédé selon l'une quelconque des revendications précédentes, le premier et/ou le troisième flux de gaz étant chauffé(s) avant d'être guidé(s) dans la première chambre à l'aide d'une première unité de chauffage.

9. Procédé selon la revendication 8, la première unité de chauffage étant un dispositif de chauffage fonctionnant à la vapeur.

10. Procédé selon l'une quelconque des revendications précédentes, les granulés humides étant transportés par l'eau de traitement d'un dispositif de coupe de granulés sous eau pour être introduits dans la première chambre conformément à l'étape ii).

11. Procédé selon l'une quelconque des revendications précédentes, le premier, le deuxième et le troisième mélange gazeux contenant majoritairement de l'azote et/ou de l'oxygène.

12. Procédé selon l'une quelconque des revendications précédentes, la première entrée de gaz étant disposée au centre au niveau de l'extrémité supérieure de telle sorte que le flux de gaz de séchage est dirigé vers l'extrémité inférieure opposée.

13. Procédé de fabrication de granulés de LDPE dans une installation industrielle, l'installation industrielle comprenant un réacteur pour des réactions de polymérisation, une extrudeuse et une installation,
l'installation comprenant un sécheur pourvu d'une première chambre comprenant une extrémité supérieure et une extrémité inférieure, comprenant une première entrée de polymère, une première sortie de polymère au-dessus de l'entrée de polymère, une première entrée de gaz au niveau de l'extrémité supérieure, une première sortie de gaz au-dessous de la première entrée de gaz et un agitateur mécanique,
l'installation comprenant en outre un silo de dégazage pourvu d'une deuxième chambre comprenant une deuxième entrée de polymère, une deuxième sortie de polymère, une deuxième entrée de gaz et une deuxième sortie de gaz,
le procédé comprenant les étapes de
a) polymérisation d'éthylène dans le réacteur à une température de 140 à 320°C et à une pression de 1400 à 3200 bars,
b) séparation du polymère et de l'éthylène et recyclage de l'éthylène n'ayant pas réagi,
c) extrusion du polymère pour obtenir une masse fondue de LDPE homogénéisée,
d) granulation de la masse fondue de LDPE pour obtenir des granulés de LDPE humides à l'aide d'un dispositif de coupe de granulés sous eau et
e) séchage et dégazage desdits granulés de LDPE humides à l'aide d'un procédé selon l'une quelconque des revendications 1 à 12 précédentes.
